# EUROPÄISCHE PATENTSCHRIFT

(11) **EP 0 547 186 B1**
(45) Veröffentlichungstag und Bekanntmachung des Hinweises auf die Patenterteilung: **03.05.1995**
(21) Anmeldenummer: 92910153.3
(22) Anmeldetag: 14.05.1992
(51) Int. Cl.: B60T 8/26, B60T 8/96

(54) **BREMSANLAGE FÜR EIN KRAFTFAHRZEUG MIT EINER EINRICHTUNG ZUR STEUERUNG DES BREMSDRUCKES**
BRAKE SYSTEM FOR A MOTOR VEHICLE WITH A DEVICE TO CONTROL THE BRAKING PRESSURE
SYSTEME DE FREINAGE POUR UN VEHICULE AUTOMOBILE COMPORTANT UN DISPOSITIF POUR LA COMMANDE DE LA PRESSION DE FREINAGE

(30) Priorität: 29.06.1991 DE 4121581
(43) Veröffentlichungstag der Anmeldung: 23.06.1993
(73) Patentinhaber: ITT Automotive Europe GmbH, 60488 Frankfurt (DE)
(72) Erfinder: BURGDORF, Jochen, D-6050 Offenbach-Rumpenhain (DE); KAUSCHKA, Peter, D-6232 Bad-Soden (DE)
(86) Internationale Anmeldenummer: EP9201066
(87) Internationale Veröffentlichungsnummer: WO9300238

(56) Entgegenhaltungen:
- DE-A- 2 625 713
- DE-A- 3 337 800
- DE-A- 4 022 481
- FR-A- 2 605 573
- GB-A- 2 134 200

## Beschreibung

Die Erfindung bezieht sich auf eine Bremsanlage für ein Kraftfahrzeug mit einer Einrichtung zur Steuerung des Bremsdruckes gemäß dem Oberbegriff des Anspruchs 1.

### Stand der Technik:

Bei der Bremsung eines Fahrzeuges bewirken die in die Räder eingeleiteten Bremskräfte ein Drehmoment um den Schwerpunkt des Fahrzeuges. Dadurch kommt es zu einer Erhöhung der Vorderradlast und einer Erniedrigung der Hinterradlast. An den Vorderrädern können daher höhere Bremskräfte übertragen werden als an den Hinterrädern. Dies ist bei der Auslegung eines Bremssystems zu berücksichtigten. Im einfachsten Fall wird der im Bremssystem aufgebaute Druck auf unterschiedlich große Flächen geleitet, wobei sich ein linearer Zusammenhang zwischen den Bremskräften an der Vorder- und an der Hinterachse einstellt. Dieses Verhältnis wird so gewählt, daß, wenn ein Blockieren der Räder nicht zu vermeiden ist, zunächst die Vorderräder und dann die Hinterräder blockieren. Diese Maßnahme erhöht wesentlich die Richtungsstabilität des Fahrzeuges beim Bremsen.

Bei einem rein linearen Zusammenhang wird die erzielbare Bremskraft an der Hinterachse nicht erreicht. Es wurde daher schon vorgeschlagen, Ventile im Hinterradbremskreis einzusetzen, die ab einem bestimmten Druckpunkt den Druck begrenzen oder mindern.

Weiterhin bekannt sind blockiergeschützte Bremsanlagen. Bei diesen Bremssystemen wird das Drehverhalten der Räder mittels Sensoren überwacht. Die Sensorsignale werden ausgewertet und zu Steuersignalen für eine Ventileinrichtung bestehend aus elektromagnetisch betätigbaren Ventilen verarbeitet, mit deren Hilfe der Bremsdruck so eingestellt wird, daß die Räder nicht blockieren.

In der DE-OS 19 61 039 wurde desweiteren vorgeschlagen, die Magnetventile nicht nur für einen Blockierschutz sondern auch zur Steuerung der Bremskraftverteilung einzusetzen. Dazu ist die Bremskraft an den Vorder- und Hinterrädern direkt oder indirekt zu messen. Aus dem Vergleich der gemessenen Verteilung mit einer optimalen Verteilung werden Steuersignale für die Magnetventile der Hinterradbremsen abgeleitet.

Je nachdem wie die in dem Bremssystem innenwohnende lineare Bremskraftverteilung ausgelegt ist, kann es passieren, daß bei Ausfall der elektronischen Steuerung das Fahrzeug während einer Bremsung in instabile Zustände kommt, da die Hinterräder blockieren während die Vorderräder noch nicht den Blockierzustand erreicht haben.

### Die Erfindung:

Zur Vermeidung dieses Nachteiles wird mit der Erfindung vorgeschlagen, daß zusätzlich zum ersten Stromkreis ein zweiter Stromkreis für den Betätigungsmagneten vorgesehen ist, der über einen Schalter verfügt, wobei weiterhin ein Relais eingesetzt ist, das in seiner Ruhestellung den zweiten Stromkreis schließt und den ersten Stromkreis unterbricht und in seiner erregten Stellung den ersten Stromkreis schließt und den zweiten Stromkreis unterbricht. Dies hat den Vorteil, daß bei Ausfall der elektronischen Steuerung zur Blockierschutz- oder Bremskraftverteilung mittels des nun aktivierten zweiten Stromkreises das Magnetventil in der Verbindung zwischen Hauptbremszylinder und den Radbremsen der Hinterachse bei Erreichen eines bestimmten Druckpunktes - falls es sich bei dem Schalter um einen Druckschalter handelt - im Hauptzylinder anspricht und so den Druck in den Hinterradbremsen begrenzt. Mit einem geringen Zusatzaufwand läßt sich daher eine einfache Bremskraftverteilung realisieren, die unabhängig von der elektronischen Steuerung arbeitet.

Statt eines Druckschalters kann auch ein verzögerungsabhängig arbeitender Schalter arbeiten, so daß der Druck in der Hinterradbremse bei einer bestimmten Fahrzeugverzögerung begrenzt wird.

Weiterführende Ausgestaltungen der Erfindung werden in den Unteransprüchen beschrieben.

### Ausführungsbeispiele:

Anhand des beiliegenden Schaltdiagramms soll die Erfindung näher erläutert werden. Der hydraulische Teil der Bremsanlage ist nur skizzenhaft dargestellt. Die Anlage besteht aus einem Hauptbremszylinder 1, an den über Bremsleitungen 2, 3 Radbremsen 4, 5 anschließen. In den Bremsleitungen 2, 3 ist je ein Einlaßventil 6, 7 eingefügt. Mit Hilfe von Auslaßventil 8, 9 kann Druckmittel aus den Radbremsen 4, 5 abgelassen werden und mittels einer Pumpe 14 in den Bremskreis zurückgefördert werden.

Ein- und Auslaßventile 6, 7, 8, 9 sind elektromagnetisch betätigte Ventile durch deren Ansteuerung der Bremsdruck in den Radbremsen 4 und 5 geregelt werden kann. Die Betätigungsmagnete 12, 13 der Einlaßventile 6, 7 sind explizit dargestellt, wobei im folgenden ihre Ansteuerung näher erläutert werden soll. Weiterhin sind Sensoren 10 und 11 vorgesehen, die das Raddrehverhalten erfassen.

Die Steuerung der Ventile erfolgt im wesentlichen durch eine elektronische Signalauswerte- und Steuereinheit 20. Diese hat ein oder mehrere Eingänge S für die für eine Steuerung notwendigen Signale, die insbesondere von den Radsensoren 10 und 11 geliefert werden. Weitere Signale die ausgewertet werden können sind die Bremskräfte an der Vorder- und Hinterachse bzw. der Druck in den Vorder- bzw. Hinterradbremsen. Desweiteren enhält die Auswerteeinheit 20 ein oder mehrere Treiber 28, 28' die den Betätigungsstrom für die Ventile 6,7,8,9 schalten. Dargestellt sind hier nur die Treiber 28, 28' für die Betätigungsmagnete 12, 13 der Einlaßventile 6, 7.

Die Anlage enthält weiterhin einen Druckschalter 23 der auf den Druck im Hauptbremszylinder anspricht. Der Schalter ist in seiner Grundstellung offen und wird geschlossen, wenn der Druck im Hauptbremszylinder ein bestimmtes Niveau erreicht. Anstelle des Druckschalters kann auch verzögerungsabhängiges Schalten vorgesehen werden. Weiter wird ein Relais 24 mit einem Betätigungsmagneten 25 benötigt. Die genannten Elemente sind zwischen dem Pluspol 21 und dem Nullpotential (Erde) 22 wie folgt geschaltet. Ein erster Stromkreis 30 führt vom Pluspol 21 über die Betätigungsmagnete 12, 13 zu den Treibern 28, 28' und über das Relais 24 zur Erde 22. Ein zweiter Stromkreis 31 führt vom Pluspol 21 über die Betätigungsmagnete 12, 13 dem Druckschalter 23 und dem Relais 24 zur Erde 22. Das Relais 24 wird über ein Relaiskreis 32 angesteuert, wobei der Relaiskreis über einen vom Zündschloß aktivierten Schalter 33 verfügt.

Da der Druckschalter 23 für die Steuerung beider Einlaßventile 6 und 7 vorgesehen sein soll, sind die zweiten Stromkreise 31 und 31' durch jeweils eine Diode 26, 27 voneinander zu trennen, damit ein Umschalten der Treibers 28, (bzw. 28') nicht auch zum Schalten des Einlaßventils 7 (bzw. 6) führt.

### Die Anlage arbeitet wie folgt:

Während einer Bremsung wird mittels Sensoren, die hier nicht dargestellt sind, die Bremskraftverteilung erfaßt. Ergibt sich eine Abweichung von der gewünschten Bremskraftverteilung, so erfolgt eine elektronische Steuerung. Dazu wird zunächst der Relaiskreis 32 angesteuert, so daß das Relais 25 in eine Position schaltet, bei der die zweiten Stromkreise 31, 31' unterbrochen sind und die ersten Stromkreise 30, 30' geöffnet sind.

Die Steuereinheit 20 kann nun die Treiber 28, 28' und weitere Treiber ansteuern, die die Ein- und Auslaßventile 6,7,8,9 betätigen. Auf diese Weise kann der Druck in den Radbremsen 4 und 5 derart eingestellt werden, daß die gewünschte Bremskraftverteilung vorliegt.

Auch das Drehverhalten der Räder wird mittels der Sensoren 10 und 11 laufend überwacht, so daß festgestellt werden kann, daß eines der Räder zu blockieren droht. Auch in diesem Fall erfolgt eine Einstellung des Bremsdruckes derart, daß ein Blockieren der Räder verhindert wird.

Sollte ein Defekt in der elektronischen Steuereinheit 20, bei der Pumpe oder den Sensoren festgestellt werden, so schaltet die Blockierschutzregelung und die elektronische Bremkraftverteilung ab. Dies beinhaltet vor allem, daß der Relaiskreis nicht mit Strom versorgt wird, so daß das Relais 24 in einer Position ist, in der die ersten Stromkreise geöffnet und die zweiten Stromkreise geschlossen sind. Wird nun bei der Bremsung im Hauptzylinder 1 ein bestimmter Druck erreicht, so spricht der Druckschalter 23 an und schließt die zweiten Stromkreise vollständig, so daß die Magnete 12, 13 ansprechen und die Bremsleitungen 2, 3 unterbrochen werden. Der Druck in den Radbremsen 4, 5 wird damit auf das vom Druckschalter vorgegebene Niveau beschränkt. Ein Überbremsen der Hinterräder wird auf diese Weise sicher vermieden.

Eine entsprechende Schaltung liegt vor, wenn ein verzögerungsabhängiger Schalter eingesetzt wird. Das Signal des Druckschalters bzw. des verzögerungsabhängigen Schalters kann auch als Zusatzinformation in die elektronische Steuereinheit 20 eingebracht werden.

### Bezugszeichenliste

- 1: Hauptbremszylinder
- 2: Bremsleitung
- 3: Bremsleitung
- 4: Radbremse
- 5: Radbremse
- 6: Einlaßventil
- 7: Einlaßventil
- 8: Auslaßventil
- 9: Auslaßventil
- 10: Sensor
- 11: Sensor
- 12: Betätigungsmagnet
- 13: Betätigungsmagnet
- 14: Pumpe
- 20: elektronische Auswerte- und Steuereinheit
- 21: Pluspol
- 22: Nullpotential
- 23: Druckschalter
- 24: Relais
- 25: Betätigungsmagnet
- 26: Diode
- 27: Diode
- 28, 28': Treiber
- 30, 30': erster Stromkreis
- 31, 31': zweiter Stromkreis
- 32: Relaiskreis
- 33: Schalter

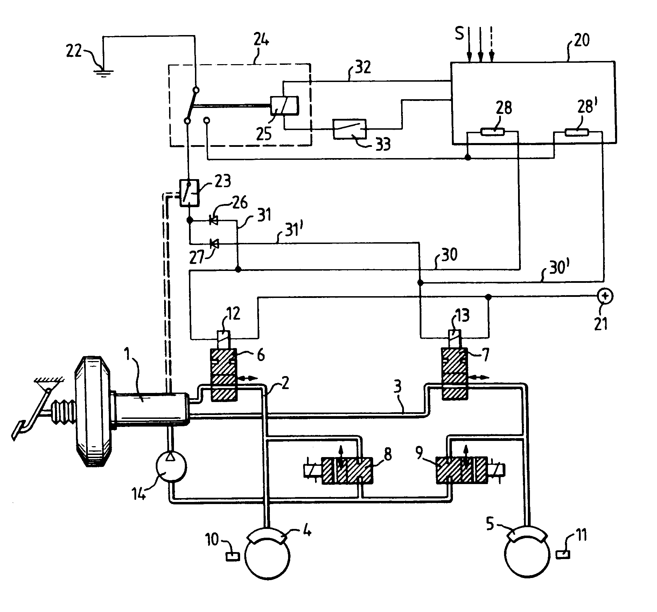

## Patentansprüche

1. Bremsanlage für ein Kraftfahrzeug mit einer Einrichtung zur Steuerung des Bremsdruckes in den Radbremsen (4,5), wobei die Steuerung auf Signalen beruht, die aus dem Raddrehverhalten und/oder der Bremskraftverteilung abgeleitet sind, wobei in der einen Richtung jeder Radbremse (4,5) ein elektromagnetisch betätigtes Ventil (6,7) zugeordnet ist, das die Verbindung zwischen der Radbremse (4,5) und dem Hauptzylinder (1) kontrolliert und dessen Betätigungsmagnet (12,13), in einem ersten Stromkreis (30,30') liegt, der in Abhängigkeit von den oben genannten Signalen geöffnet bzw. geschlossen wird, dadurch **gekennzeichnet**, daß der Betätigungsmagnet (12, 13) zusätzlich in einem zweiten Stromkreis (31, 31') liegt, der über einen Schalter (23) verfügt, und daß ein Relais (25) vorgesehen ist, das in seiner Ruhestellung den zweiten Stromkreis schließt und den ersten Stromkreis unterbricht und in seiner erregten Stellung den ersten Stromkreis schließt und den zweiten Stromkreis unterbricht.

2. Bremsanlage nach Anspruch 1, dadurch **gekennzeichnet**, daß der Schalter ein Druckschalter (23) ist, der auf den Hauptzylinderdruck anspricht.

3. Bremsanlage nach Anspruch 1, dadurch **gekennzeichnet**, daß der Schalter (23) verzögerungsabhängig arbeitet.

4. Bremsanlage nach Anspruch 1, 2 oder 3, dadurch **gekennzeichnet**, daß die beiden zweiten Stromkreise (31, 31') in einem gemeinsamen Teilstück über einen einzigen Schalter (23) verfügen, wobei zur Trennung der Kreise je eine Diode (26, 27) vorgesehen ist.

5. Bremsanlage nach Anspruch 1, dadurch **gekennzeichnet**, daß der Stromkreis (32) zum Steuern des Relais (25) über einen Schalter (33) verfügt, der vom Zündschloß aktiviert wird.

## Claims

1. A brake system for an automotive vehicle with a device for controlling the braking pressure in the wheel brakes (4, 5), the control being based on signals which are derived from the wheel rotational behaviour and/or from the brake force distribution, wherein in the one direction each wheel brake (4, 5) is furnished with an electromagnetically operated valve (6, 7), which governs the connection between the wheel brake (4, 5) and the master cylinder (1), and the actuating magnet (12, 13) of which is inserted in a first current circuit (30, 30') which is opened and closed in response to the above-mentioned signals,
**characterized** in that the actuating magnet (12, 13) additionally is inserted in a second current circuit (31, 31') including a switch (23), and in that a relay (25) is provided which, in its inactive position, closes the second current circuit and interrupts the first current circuit, while, in its excited position, it closes the first current circuit and interrupts the second current circuit.

2. A brake system as claimed in claim 1,
**characterized** in that the switch is a pressure switch (23) responding to the master cylinder pressure.

3. A brake system as claimed in claim 1,
**characterized** in that the switch (23) operates responsive to deceleration.

4. A brake system as claimed in claim 1, 2 or 3,
**characterized** in that the two second current circuits (31, 31') in a joint section are furnished with one single switch (23), one diode (26, 27) each being provided for isolating the circuits.

5. A brake system as claimed in claim 1,
**characterized** in that the current circuit (32) for controlling the relay (25) is furnished with a switch (33) which responds to the ignition lock.

## Revendications

1. Système de freinage pour un véhicule automobile comportant un dispositif de régulation de la pression de freinage régnant dans les freins de roue (4, 5), la régulation reposant sur des signaux dérivés du comportement de rotation des roues et/ou de la répartition des efforts de freinage, une soupape (6, 7) à commande électromagnétique étant associée, dans un sens, a chaque frein de roue (4, 5), cette soupape commandant la liaison entre le frein de roue (4, 5) et le maître-cylindre (1) de frein, et son électro-aimant (12, 13) de commande étant agencé dans un premier circuit électrique (30, 30') qui est ouvert ou fermé en fonction des signaux susmentionnés,
caractérisé en ce que l'électro-aimant (12, 13) de commande est disposé en plus dans un deuxième circuit électrique (31, 31') comportant un interrupteur (23), et en ce qu'un relais (25) est prévu, qui, dans sa position de repos, ferme le deuxième circuit électrique et coupe le premier circuit électrique, et, dans sa position excitée, ferme le premier circuit électrique et coupe le deuxième circuit électrique.

2. Système de freinage selon la revendication 1, caractérisé en ce que l'interrupteur est un manocontact (23), qui est sensible à la pression régnant dans le maître-cylindre de frein.

3. Système de freinage selon la revendication 1, caractérisé en ce que l'interrupteur (23) fonctionne de façon sensible à la décélération.

4. Système de freinage selon la revendication 1, 2 ou 3, caractérisé en ce que les deux seconds circuits électriques (31, 31') comportent un interrupteur unique (23) disposé dans un tronçon commun, une diode respective (26, 27) étant prévue pour assurer la séparation des circuits.

5. Système de freinage selon la revendication 1, caractérisé en ce que le circuit électrique (32) de commande du relais (25) comporte un interrupteur (33) activé via le contact d'allumage.
